## Europäisches Patentamt
## European Patent Office
## Office européen des brevets

(19)

(11) Veröffentlichungsnummer: **0 141 314**
**B1**

(12)
# EUROPÄISCHE PATENTSCHRIFT

(45) Veröffentlichungstag der Patentschrift:
20.04.88

(21) Anmeldenummer: 84112280.7

(22) Anmeldetag: 12.10.84

(51) Int. Cl.⁴: **C 08 J 3/12, C 08 J 3/00 //**
**(C08J3/12,**
**C08L77:02),(C08J3/00,**
**C08L77:02)**

(54) **Verfahren zur Herstellung von trockenem Polycaprolactamgranulat.**

(30) Priorität: 21.10.83 DE 3338294

(43) Veröffentlichungstag der Anmeldung:
15.05.85 Patentblatt 85/20

(45) Bekanntmachung des Hinweises auf die Patenterteilung:
20.04.88 Patentblatt 88/16

(84) Benannte Vertragsstaaten:
BE CH DE IT LI NL

(56) Entgegenhaltungen:
EP - A - 0 091 566
GB - A - 1 548 179
US - A - 2 859 479

JOURNAL OF APPLIED PHYSICS, Band 28, Nr. 10,
Oktober 1957, Seiten 1101-1105, American Institute of
Physics, New York, US; B.B. BURNETT et al.: "Kinetics
of spherulite growth in high polymers"

(73) Patentinhaber: BASF Aktiengesellschaft,
Carl-Bosch-Strasse 38, D-6700 Ludwigshafen (DE)

(72) Erfinder: Elbs, Peter, Altrheinstrasse 2,
D-6701 Otterstadt (DE)
Erfinder: Jeserich, Wolfgang-Dieter, Dr.,
Anselm-Feuerbach-Strasse 12, D-6710 Frankenthal (DE)
Erfinder: Wehr, Rudolf, Dr., Mandelring 15,
D-6706 Wachenheim (DE)

# Beschreibung

Gegenstand der Erfindung ist ein Verfahren zur Herstellung von trockenem Polycaprolactamgranulat mit einem Gehalt an Caprolactam und dessen Oligomeren von 8 bis 13 Gew.-%, wobei man eine 8 bis 13 Gew.-% Caprolactam und dessen Oligomere enthaltende Polycaprolactamschmelze in Stränge gießt, abkühlt, granuliert und mit Inertgasen bei erhöhter Temperatur behandelt.

Bei der Herstellung von Polycaprolactam durch hydrolytische Polymerisation von Caprolactam nach bekannten Verfahren (vgl. Mark «Man-Made Fibers», Vol. 2 [1968], Seiten 240 bis 245), z.B. in einem VK-Rohr, erhält man entsprechend dem Polymerisationsgleichgewicht Polycaprolactam mit einem Gehalt von etwa 11 Gew.-% monomerem Caprolactam und dessen Oligomere. Üblicherweise wird diese Schmelze in Stränge gegossen und diese Stränge in einem Wasserbad auf eine Temperatur unter 50°C abgekühlt und granuliert. Das Monomeren und Oligomeren enthaltende Granulat wird anschließend mit Wasser extrahiert und getrocknet.

Für spezielle Anwendungsbereiche ist jedoch erwünscht, Polycaprolactam mit dem ursprünglichen Gehalt an Caprolactam und dessen Oligomere zu verwenden. Versucht man, das wie oben beschrieben erhältliche Granulat zu trocknen, so treten Verbackungen ein. Es ist aus der DE-A 33 06 906 auch schon bekannt, Polycaprolactamgranulat bei erhöhter Temperatur mit Inertgasen zum Zwecke der Festphasenkondensation zu behandeln. Um Verbackungen zu vermeiden, wird auch hier empfohlen, extrahiertes Granulat zu verwenden und zusätzlich Mittel zuzusetzen, die das Verbacken verhindern. Auch nach dem in der GB-A- 1 548 179 beschriebenen Verfahren zur Temperung von Polycaprolactam mit Stickstoff geht man ausweislich Seite 2, Zeilen 53 bis 56 von extrahiertem Granulat aus.

Es war deshalb die technische Aufgabe gestellt, trockenes Polycaprolactamgranulat mit einem Gehalt an Caprolactam und dessen Oligomeren von 8 bis 13 Gew.-% zur Verfügung zu stellen, wobei keine Verbackungen eintreten.

Diese Aufgabe wird gelöst in einem Verfahren zur Herstellung von trockenem Polycaprolactamgranulat mit einem Gehalt an Caprolactam und dessen Oligomeren von 8 bis 13 Gew.-%, wobei man eine 8 bis 13 Gew.-% Caprolactam und dessen Oligomere enthaltende Polycaprolactamschmelze in Stränge gießt, abkühlt, granuliert und mit Inertgasen bei erhöhter Temperatur behandelt, dadurch gekennzeichnet, daß man die Stränge auf 100 bis 150°C abkühlt und bei dieser Temperatur beläßt, bis das Polycaprolactam weitgehend kristallisiert ist, unmittelbar anschließend granuliert und das Granulat in einem Inertgasstrom unter Ausschluß von molekularem Sauerstoff für einen Zeitraum von 1 bis 4 Stunden bei einer Temperatur von 100 bis 150°C beläßt und dann abkühlt.

Das neue Verfahren hat den Vorteil, daß beim Trocknen des Polycaprolactamgranulats keine Verbackung eintritt, obwohl das Granulat einen hohen Anteil an Monomeren und Oligomeren enthält. Ferner hat das neue Verfahren den Vorteil, daß die im Polycaprolactamgranulat enthaltene Wärmeenergie zur Trocknung benützt wird. Das neue Verfahren ist insofern bemerkenswert, als beim Granulieren von Polyamidsträngen von über 100°C mit Schwierigkeiten zu rechnen war und zudem Verbackungen beim Trocknen zu erwarten waren.

Die Polycaprolactamschmelze wird wie üblich durch hydrolytische Polymerisation von Caprolactam bei Temperaturen von 240 bis 300°C in Polymerisationsrohren, sogenannten VK-Rohren, hergestellt. Eine solche Schmelze enthält üblicherweise in Abhängigkeit von der Temperatur im Gleichgewichtszustand etwa 8 bis 13 Gew.-% Caprolactam und dessen Oligomere. Diese Schmelze wird vorteilhaft bei Temperaturen von 220 bis 280°C in Stränge, z.B. mit einem Durchmesser von 1 bis 3 mm, gegossen. Die so erhaltenen Stränge werden in der Regel mit einer Geschwindigkeit von 30 bis 180 m/min abgezogen und auf eine Temperatur von 100 bis 150°C abgekühlt und bei dieser Temperatur belassen, bis das Polycaprolactam weitgehend kristallisiert ist.

Vorteilhaft bringt man die noch schmelzflüssigen, frischgegossenen Polycaprolactamstränge kurzzeitig in Berührung mit Wasser, z.B. von einer Temperatur von 15 bis 50°C und kühlt so auf 100 bis 150°C ab. In der Regel brauchen die Stränge nur wenige Sekunden, z.B. von 0,5 bis 5 Sekunden, mit Wasser in Berührung gebracht zu werden. Anschließend leitet man die so abgekühlten Stränge ohne weitere Kühlung, d.h. mit einer Temperatur von 100 bis 150°C durch die umgebende Luft, bis das Polycaprolactam weitgehend kristallisiert ist. Hierzu sind ebenfalls nur wenige Sekunden, z.B. von 2 bis 20 Sekunden, nötig.

Die so weitgehend kristallisierten Polycaprolactamstränge werden unmittelbar darauf in üblicher Weise granuliert und in eine Trockenzone überführt, wo das Granulat unter Beaufschlagung mit Inertgas, z.B. Stickstoff, unter Ausschluß von molekularem Sauerstoff, vorteilhaft mit einem Gehalt an molekularem Sauerstoff von weniger als 10 ppm, für einen Zeitraum von 1 bis 4 Stunden bei einer Temperatur von 100 bis 150°C, insbesondere 125 bis 150°C, belassen wird. Anschließend wird das Granulat abgekühlt und wie üblich in Behälter abgefüllt.

Das so erhaltene Polycaprolactamgranulat mit einem Gehalt an Caprolactam und Oligomeren von 8 bis 13 Gew.-% hat einen Wassergehalt von 0,02 bis 0,10 Gew.-%. So hergestelltes Granulat eignet sich für die Erzeugung von weichgemachten Polyamidartikeln, z.B. Angelschnüre, Garn für Fischernetze und flexible Röhren.

Das Verfahren nach der Erfindung sei an folgenden Beispielen veranschaulicht.

Beispiel 1

Extrakthaltiges Polyamid-6 der relativen Vikosität 3,1 (1 g in 100 ml 96%ige Schwefelsäure), Extraktgehalt 11,0% (9,4% Caprolactam und 1,6% cyclische Oligomere des Caprolactams) wird mit einer Temperatur von 280°C extrudiert, der Strang 2 Meter durch ein Wasserbad von 35°C geführt (Verweilzeit 2 Sekunden), dann 6 Meter durch Luft von 22 bis 28°C geführt (Verweilzeit 6 Sekunden) und anschließend granuliert.

Die Temperatur des Granulats beträgt 110°C, der Wassergehalt 0,15 bis 0,20%. Das heiße Granulat fällt direkt in einen Schachttrockner, der mit Stickstoff gespült wird, um Sauerstoff auszuschließen und das freigesetzte Wasser zu entfernen. Dem Trockner wird das Granulat kontinuierlich entnommen und abgekühlt. Die Verweilzeit des Granulats im Trockner beträgt 4 Stunden. Das Polyamid-6 hat eine relative Viskosität (1 g in 100 ml 96% Schwefelsäure) von 3,1, einen Extraktgehalt von 10,9% (9,3% Caprolactam und 1,6% cyclische Oligomere des Caprolactams); der Wassergehalt beträgt 0,04 bis 0,06%.

Beispiel 2

Die Abhängigkeit des verbleibenden Wassers von nach Beispiel 1 hergestelltem extrakthaltigem Polyamid-6 von der Verweilzeit und Temperatur im Trockner ist wie folgt:

| Verweilzeit | Temperatur | | |
| Stunden | 100°C | 125°C | 150°C |
| | Wassergehalt in % | | |
| 1 | 0,14 | 0,11 | 0,03 |
| 2 | 0,10 | 0,04 | 0,02 |
| 4 | 0,07 | 0,02 | – |
| 5 | 0,04 | – | – |
| 6 | 0,03 | – | – |
| 8 | 0,02 | – | – |

Beispiel 3

Extrakthaltiges Polyamid, relative Viskosität 2,7 (1 g in 100 ml 96% Schwefelsäure), Extraktgehalt 11,8% (10,4% Caprolactam und 1,4% cyclische Oligomere des Caprolactams) wird wie im Beispiel 1 behandelt. Das extrakthaltige getrocknete Polyamid-6 hat eine relative Viskosität (1 g in 100 ml 96% Schwefelsäure) von 2,7, einen Extraktgehalt von 11,6% (10,2% Caprolactam und 1,4% zyklische Oligomere des Caprolactams); der Wassergehalt beträgt 0,03 bis 0,05%.

**Patentansprüche**

1. Verfahren zur Herstellung von trockenem Polycaprolactamgranulat mit einem Gehalt an Caprolactam und dessen Oligomeren von 8 bis 13 Gew.-%, wobei man eine 8 bis 13 Gew.-% Caprolactam und dessen Oligomere enthaltende Polycaprolactamschmelze in Stränge gießt, abkühlt, granuliert und mit Inertgasen bei erhöhter Temperatur behandelt, dadurch gekennzeichnet, daß man die Stränge auf 100 bis 150°C abkühlt und bei dieser Temperatur beläßt, bis das Polycaprolactam weitgehend kristallisiert ist, unmittelbar anschließend granuliert und das Granulat in einem Inertgasstrom unter Ausschluß von molekularem Sauerstoff für einen Zeitraum von 1 bis 4 Stunden bei einer Temperatur von 100 bis 150°C beläßt und dann abkühlt.

2. Verfahren nach Anspruch 1, dadurch gekennzeichnet, daß man die Stränge durch kurzzeitiges Inberührungbringen mit Wasser auf 100 bis 150°C abkühlt und dann in der Luft bei dieser Temperatur beläßt, bis das Polycaprolactam weitgehend kristallisiert ist.

3. Verfahren nach den Ansprüchen 1 und 2, dadurch gekennzeichnet, daß man die Stränge 0,5 bis 5 Sekunden mit Wasser in Berührung bringt und anschließend 2 bis 20 Sekunden in Luft bei einer Temperatur von 100 bis 150°C das Polycaprolactam weitgehend kristallisiert.

4. Verfahren nach den Ansprüchen 1 bis 3, dadurch gekennzeichnet, daß das verwendete Inertgas einen Gehalt an molekularem Sauerstoff von weniger als 10 ppm hat.

5. Verfahren nach den Ansprüchen 1 bis 4, dadurch gekennzeichnet, daß man das Granulat bei einer Temperatur von 125 bis 150°C im Inertgasstrom beläßt.

**Claims**

1. A process for the preparation of dry polycaprolactam granules containing from 8 to 13% by weight of caprolactam and its oligomers, a polycaprolactam melt containing the said amount of caprolactam and its oligomers being extruded, cooled, granulated and treated with an inert gas at elevated temperature, wherein the extrudates are cooled to 100–150°C, left at this temperature until the polycaprolactam has substantially crystallized, and then immediately granulated, and the granules are left in a stream of inert gas, in the absence of molecular oxygen, for from 1 to 4 hours at from 100 to 150°C, and are then cooled.

2. A process as claimed in claim 1, wherein the extrudates are cooled to 100–150°C by being brought into contact with water for a short time, and are then left in the air at this temperature until the polycaprolactam has substantially crystallized.

3. A process as claimed in claims 1 and 2, wherein the extrudates are brought into contact with water for from 0.5 to 5 seconds, after which the polycaprolactam substantially crystallizes in the course of from 2 to 20 seconds in air at from 100–150°C.

4. A process as claimed in claims 1 to 3, wherein the inert gas used contains less than 10 ppm of molecular oxygen.

5. A process as claimed in claims 1 to 4, wherein the granules are left in a stream of inert gas at from 125 to 150°C.

**Revendications**

1. Procédé de préparation de granules secs de polycaprolactame, d'une teneur en caprolactame et en oligomères de celle-ci comprise entre 8 et 13% en poids, dans lequel une polycaprolactame fondue, contenant entre 8 et 13% en poids de caprolactame et d'oligomères de celle-ci, est extrudée en boudins, qui sont refroidis et granulés, puis traités à température accrue avec des gaz inertes, catactérisé en ce que les boudins sont refroidis entre 100 et 150°C, puis maintenus à cette température jusqu'à cristallisation avancée de la polycaprolactame, ensuite granulés immédiatement et le produit granulé est maintenu pendant une à quatre heures, entre 100 et 150°C, dans un courant d'un gaz inerte, à l'abri de l'oxygene moléculaire, avant d'être refroidi.

2. Procédé suivant la revendication 1, caractérisé en ce que les boudins sont refroidis entre 100 et 150°C par un contact de courte durée avec de l'eau, puis maintenus dans l'air à cette température jusqu'à cristallisation avancée de la polycaprolactame.

3. Procédé suivant les revendications 1 et 2, caractérisé en ce que les boudins sont mis en contact avec de l'eau pendant 0,5 à 5 secondes, puis on laisse cristalliser la polycaprolactame pendant 2 à 20 secondes dans l'air entre 100 et 150°C.

4. Procédé suivant les revendications 1 à 3, caractérisé en ce que le gaz inerte mis en œuvre possède une teneur en oxygène moléculaire inférieure à 10 ppm.

5. Procédé suivant les revendications 1 à 4, caractérisé en ce que le produit granulé est maintenu dans le courant de gaz inerte à une température de 125 à 150°C.